# EUROPÄISCHE PATENTSCHRIFT

(11) **EP 1 254 693 B1**
(45) Veröffentlichungstag und Bekanntmachung des Hinweises auf die Patenterteilung: **26.10.2005**
(21) Anmeldenummer: 02001201.9
(22) Anmeldetag: 17.01.2002
(51) Int. Cl.: B01D 46/02, A47L 9/14

(54) **Luftfilter mit elektrostatisch wirksamen Vliesstoffschicht und deren Verwendung**
Air filter with electrostatically active fabric layer and its use
Filtre à air contenant une couche fibreuse électrostatiquement active et son utilisation

(30) Priorität: 24.04.2001 DE 10120223
(43) Veröffentlichungstag der Anmeldung: 06.11.2002
(73) Patentinhaber: Carl Freudenberg KG, 69469 Weinheim (DE)
(72) Erfinder: Schultheiss, Wolfram, 69469 Weinheim (DE); Greiner, Armin, Dr. rer.nat., 69469 Weinheim (DE); Frank, Silke, 68167 Mannheim (DE)

(56) Entgegenhaltungen:
- EP-A- 0 626 192
- DE-A- 4 143 237
- DE-A- 4 443 158
- US-A- 4 904 174

## Beschreibung

### Technisches Gebiet

Die vorliegende Erfindung betrifft Filtermaterialien mit verbesserten Filtrationseigenschaften, die insbesondere in Staubsaugerbeuteln Verwendung finden.

Die Verwendung von Filterbeuteln in Staubsaugern ist allgemein bekannt. Für derartige Anwendungen müssen die Beutel einer Vielzahl von Anforderungen genügen, die zum Teil gegenläufig sind. Neben einem hohen Abscheidegrad für Stäube, sowohl für Grob- als auch für Feinstäube, werden ein geringer Luftwiderstand, eine geringe Verstopfungsneigung sowie mechanische Stabilität gefordert.

Ein generelles Problem von Staubsaugerbeuteln ist deren Verstopfungsneigung, wenn kompakte Materialien mit mechanischen Filtrationseigenschaften eingesetzt werden, wie Papier oder Feinfaserspinnvliesstoffe ohne voluminösen Aufbau. Dieser kompakte Aufbau trägt zwar dazu bei die Staubbarriereeigenschaften eines Filterbeutels zu verbessern macht den Beutel jedoch anfällig gegenüber Feinstaub, der in diese kompakten Filtermedien eindringt und diese verstopft. Parameter, wie Saugleistungskonstanz und Abscheideleistung eines Filterbeutels, wie eines Staubsaugerbeutels, stellen üblicherweise einen Kompromiss dar. Dies bedeutet, daß bei Verbesserung der Saugleistungskonstanz die Abscheideleistung eines Staubsaugerbeutels üblicherweise nicht entscheidend verbessert werden kann.

### Stand der Technik

Filterbeutel auf der Basis von Papier / Meltblown sind z.B. in der DE-C-197 31 860 oder der EP-A-0 338 479 beschrieben; aus der EP-A-0 161 790 sind Filterbeutel auf der Basis Spunbond / Meltblown bekannt.

Aus der EP-A-0 960 645 sind Inlinerlagen in Grobfilterausführung bekannt, die die nachfolgende eigentliche Filtrationsschicht vor Verstopfung durch Grobstaub schützen. Die in diesem Dokument beschriebenen Staubsaugerbeutel bestehen aus mehreren Lagen, denen eine Grobfilterlage aus verschiedenen Materialien vorgeschaltet wird, um die Standzeit des Beutels zu erhöhen. Dabei werden Schichten aus speziellen Papieren und aus speziellen Non-Wovens miteinander verbunden. Der Einsatz von elektrostatisch aufladbaren bzw. geladenen Fasern, beispielsweise von Polypropylenfasern, in ausgewählten Papierschichten bzw. Schichten aus Non-Wovens wird offenbart.

Aus der EP-A-0 246811 sind Filtermaterialien bekannt, welche aus Mischungen aus Polypropylenfasern und Modacrylfasern bestehen. Vliesstoffe aus diesen Fasermischungen können als Staubersaugerfilter eingesetzt werden. Diese Fasermischungen lassen sich aufgrund ihrer starken elektrostatischen Eigenschaften besonders gut für die Filtration von Feinststäuben einsetzen.

In der EP-A-0 674 933 wird die Herstellung eines Luftfiltermaterials mit elektrostatischer Wirksamkeit beschrieben, welches die Herstellung eines genadelten Kardenvlieses aus ausgewählten Fasern beinhaltet.

Die DE-A-44 43 158 beschreibt ein selbsttragenes oder durch einen Verbund mit einem Trägermaterial stabilisiertes abreinigbares Filtermedium für die Filtration von Gasen, bei dem die aktive Filtrationsschicht aus einem Faservlies besteht, das nach dem Meltblown-Verfahren hergestellt ist.

### Darstellung der Erfindung

Ausgehend von diesem Stand der Technik wird mit der vorliegenden Erfindung ein Luftfiltermaterial bereitgestellt, dessen Gesamtabscheideleistung (Abscheideleistung für Grob- und Feinstäube) gegenüber herkömmlichen Luftfiltermaterialien nennenswert verbessert wurde, ohne dass die Verstopfungstendenz dadurch maßgeblich verschlechtert, ja sogar verbessert wurde. Die erfindungsgemäßen Luftfilter zeichnen sich also im Vergleich zu bekannten Materialien durch eine verbesserte Gesamtabscheideleistung aus.

Die Erfindung betrifft einen mehrlagigen Luftfilter umfassend eine Filterschicht, vorzugsweise eine synthetische Fasern enthaltende Filterschicht, und eine diese rohgasseitig überdeckende Vorfilterschicht, wobei die Vorfilterschicht einen trocken gelegten und elektrostatisch wirksamen Vliesstoff, vorzugsweise einen Stapelfaser-Vliesstoff, aufweist, dessen Flächengewicht 10 bis 100 g/m² beträgt.

Bei der erfindungsgemäß zum Einsatz kommenden Filterschicht kann es sich um ein herkömmliches Filtermaterial handeln. Beispiele dafür sind Papier, oder Kombinationen von Papier mit Meltblown-Vliesstoff oder Kombinationen von Spinnvliesstoff mit Meltblown-Vlies, wie sie in Staubsaugerbeuteln bereits verwendet werden. Solche herkömmlichen Filtermaterialien sind z.B. Meltblown-Kombinationen nach EP-A-0 161 790, Papier / Meltblown-Kombinationen nach EP-A0 338 479 bzw. nach DE-C-197 31 860 oder auch reine Papierfiltermedien.

Ganz besonders bevorzugt besteht die Filterschicht aus einem Spunbond-Meltblown-Spunbond-Laminat.

Erfindungsgemäß wird diesen Filterschichten zur gleichzeitigen Steigerung der Saugleistungskonstanz und Abscheideleistung eine hocheffiziente Filterlage bestehend aus Vliesstoff mit starker elektrostatischer Aufladung vorgeschaltet. Dies kann durch loses Einlegen der Vorfilterschicht in den Filterbeutel oder durch Einbau in entsprechende Laminat-Filtermaterialien erfolgen.

Die erfindungsgemäß eingesetzte Filterschicht (Inliner) vermag durch ihre starken elektrostatischen Filtrationseigenschaften, welche sich durch die Abscheideleistung gegenüber Kochsalzstaub quantifizieren lassen, die nachfolgende(n) Filterschicht oder -schichten mit deren geometrisch feineren Poren vor Feinstaub und damit verbundener Verstopfung effektiv zu schützen.

Die Funktion eines mit der oben genannten Filterschicht ausgestatteten Staubsaugerbeutels besteht somit in der Kombination einer relativ voluminösen, elektrostatisch geladenen Filterschicht aus Vliesstoff mit einer nachfolgenden mechanisch gut filtrierenden, kompakteren Filterschicht, die in der Regel feinere Porenradien und Fasertiter aufweist.

Besonders bevorzugt setzt man als trocken gelegten elektrostatisch wirksamen Vliesstoff einen trocken gelegten Stapelfaservliesstoff aus triboelektrischen Fasermischungen ein, insbesondere aus Polypropylen/Polyethylen-Bikomponentenfasern und aus halogenfreien Polyacrylnitrilfasern. Derartige Fasermischungen sind in der DE-A-4,407,344 beschrieben.

Weitere bevorzugt eingesetzte Vorfilter sind trocken gelegte Stapelfaservliesstoffe aus coronageladenen Polyolefinfasern, insbesondere aus coronageladenen Polypropylenfasern.

Weitere bevorzugt eingesetzte Vorfilter sind trockengelegte Vliesstoffe aus koronageladenen Polypropylen-Spaltfasern. Beispiele dafür sind in der US-A-3,998,916 beschrieben.

Die erfindungsgemäßen Luftfilter umfassen vorzugsweise einen trocken gelegten Stapelfaser-Vliesstoff mit einer Luftdurchlässigkeit von grösser gleich 700 l/(m²*sec), vorzugsweise grösser gleich 1000 l/(m²*sec), bei einem Differenzdruck von 200 Pa, einer NaCl-Durchlässigkeit D_{NaCl} von kleiner gleich 40%, vorzugsweise kleiner gleich 30%, und einem Differenzdruck von kleiner gleich 20 Pa.

Die Fasern der Vorfilterschicht sind vorzugsweise Stapelfasern. Besonders bevorzugt wird die Vorfilterschicht aus Stapelfasern mit einem Titer < 10 dtex hergestellt. Die Länge der Stapel beträgt vorzugsweise 3 bis 10 cm.

Ganz besonders bevorzugt ist die Vorfilterschicht aus Stapelfasern mit einem Titer von 0,5 bis 5 dtex hergestellt und weist ein Flächengewicht von 30 bis 60 g/m² auf.

Filterschicht und Vorfilterschicht können entweder ohne Verbindung durch einfaches Einlegen des Vorfilters in den Filterbeutel oder auf beliebige Arten miteinander verbunden sein, beispielsweise durch mechanische Verbindungen, wie durch Nadeln, Vernähen oder Versteppen, oder durch physikalische Verbindungen, wie durch Verkleben oder Verschweissen. Es ist auch möglich, diese Schichten über weitere Zwischenschichten miteinander zu verbinden, wobei die Luftdurchlässigkeit dieser Schichten jedoch gewährleistet sein muß.

Vorzugsweise ist die Vorfilterschicht mit der Filterschicht direkt verbunden.

In einer weiteren bevorzugten Ausführungsform ist rohgasseitig vor der Vorfilterschicht eine weitere Vliesstoff- und/oder Papierschicht angeordnet, die die nachfolgenden Schichten vor mechanischer Beschädigung schützt oder als Verarbeitungshilfe dient.

Die erfindungsgemäß eingesetzten Inliner zeichnen sich durch vergleichbare oder geringere Durchlassgrade (D_{NaCl}) bzw. vergleichbare oder höhere Abscheideleistungen für NaCl (A_{NaCl} = 100 - D_{NaCl}) gegenüber Feinaerosol bei gleichzeitiger mindestens doppelter, vorzugsweise mindestens vierfacher Luftdurchlässigkeit im Vergleich zur Gesamtheit der nachfolgenden Filterlage(n) aus. Der Quotient aus Luftdurchlässigkeit (bei 200 Pa in l/m²s) und Durchlassgrad (D_{NaCl} in %) ist bei den erfindungsgemäß zu verwendenden Materialien üblicherweise grösser als 120 bei gleichzeitigem Druckverlust von maximal 20 Pa und Flächengewichten zwischen 10 und 100 g/m².

Die erfindungsgemäßen Luftfilter können für beliebige Filtrationszwecke zum Einsatz gelangen, vorzugsweise als Staubsaugerbeutel.

Die folgenden Beispiele beschreiben die Erfindung ohne diese zu begrenzen.

### Beispiele

### Beschreibung der getesteten Produkte

Getestet wurden herkömmliche Staubsaugerbeutel auf der Basis von SMS, vom Typ wie in der EP-A-0 161730 beschrieben.

Als SMS-Verbund wurden 40 g Spunbond auf Basis von Polypropylenfasern, 30 g Meltblown und 15 g Spunbond auf Basis von Polypropylenfasern eingesetzt.

Der Spinnvliesinliner des untersuchten SMS-Beutels bestand aus 30 g Polypropylenfasern.

Inliner 1 und Inliner 2 bestanden aus Polypropylenfasern des Titers 3,3 dtex bzw. 1,7 dtex.

### Prüfmethoden

### Luftdurchlässigkeit

### Ermittelt gemäß DIN 53 887 gemessen bei 200 Pa (Fläche 20 cm²)

### Durchlassgrad Natriumchlorid und Druckdifferenz

Der Durchlassgrad Natriumchlorid wurde mit dem Gerät "TSI Certitest Model 8130" ermittels. Als Aerosolgenerator wurde das TSI Modell 8118 für Kochsalz verwendet, das Natriumchloridpartikel mit einem mittleren Durchmesser von 0,26 µm (Masse) erzeugt. Gemessen wurde bei einer Filtrationsgeschwindigkeit von 0,08 m/s. Der Durchlassgrad - NaCI ist das Maß für den Durchgang des vom Filtermedium nicht abgeschiedenen Natriumchloridaerosols. Die Druckdifferenz ausgedrückt in Pascal (Pa) ist der statische Druckabfall über dem Filtermedium gegenüber dem Volumenstrom von 0,08 m/s.

### Ergebnisse

Die technischen Werte der erfindungsgemäß eingesetzten Filterlagen und deren Auswirkung auf Filterbeutel zeigt exemplarisch die nachstehende Tabelle.

**Tabelle 1:**

| Durchlassgrad und Druckverlust von Inlinern sowie eines typischen SMS (spunbond/melt-blown/spunbond) Beutelmaterials mit und ohne Inliner. | | | |
|---|---|---|---|
| Produkt | Durchlassgrad D_{NaCl} (%) | Druckverlust (Pa) | Luftdurchlässigkeit bei 200Pa (l/m²s) |
| Inliner 1 (50g/m²; 3,3 dtex) | 27 | 3,0 | 3300 |
| Inliner 2 (50g/m²; 1,7 dtex) | 9,2 | 7,4 | 2000 |
| SMS-Filterbeutelmaterial ohne Inliner | 30 | 50 | 350 |
| SMS-Filterbeutelmaterial mit Inliner 1 | 10 | 53 | 340 |

Als Anwendungsbeispiel soll exemplarisch die Verbesserung der Saugleistungskonstanz eines typischen SMS-Filterbeutels gezeigt werden. Die Ergebnisse sind in der nachstehenden Abbildung aufgeführt.

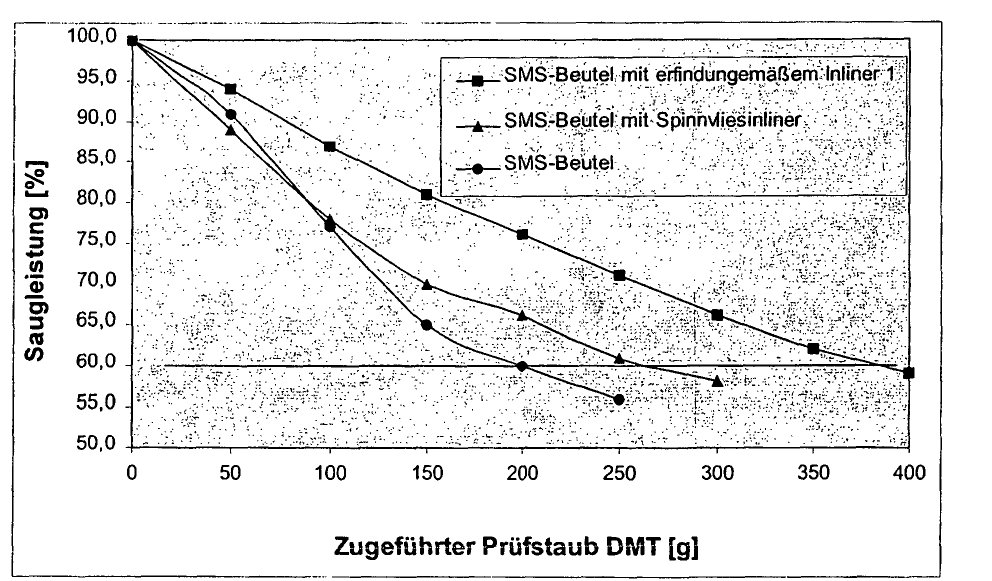

Die obige Abbildung zeigt die Saugleistungskonstanz von Filterbeuteln aus SMS Material mit dem erfindungsgemäßen Inliner1 im Vergleich zum gleichen SMS Filterbeutelmaterial mit einem herkömmlichen Spinnvliesstoff als Inliner und ohne Inliner.

Der erfindungsgemäße Inliner1 führt in diesem Anwendungsbeispiel fast zu einer Verdoppelung des entsprechenden Staubspeichervermögens (bei 60% Saugleistung 380g Staub gegenüber 200g Staub) und damit zu einer erheblichen Verlängerung der Standzeit eines derartig ausgestatteten Filterbeutels. Gegenüber Verbesserungen, die herkömmliche Inlinermaterialien wie Spinnvliesstoffe oder poröse Papiere leisten, heben sich die erfindungsgemäßen Materialien deutlich ab. Darüber hinaus wird die Abscheideleistung gegenüber Feinstaub des gesamten Beutellaminates bei Verwendung von Inliner1 stark verbessert.

## Patentansprüche

1. Mehrlagiger Luftfilter umfassend eine Filterschicht aus Kombinationen von Spinnvlies mit Meltblown-Vliesstoff oder aus einem Spunbond-Melblown-Spunbond-Laminat und eine diese rohgasseitig überdeckende Vorfilterschicht, wobei die Vorfilterschicht einen trocken gelegten und elektrostatisch wirksamen Stapelfaser-Vliesstoff aufweist, dessen Flächengewicht 10 bis 100 g/m² beträgt.

2. Luftfilter nach Anspruch 1, **dadurch gekennzeichnet, dass** der trocken gelegte elektrostatisch wirksame Vliesstoff ein trocken gelegter Stapelfaservliesstoff aus coronageladenen Polyolefinfasem, insbesondere aus coronageladenen Polypropylenfasern, ist.

3. Luftfilter nach Anspruch 1, **dadurch gekennzeichnet, dass** der trocken gelegte elektrostatisch wirksame Vliesstoff ein trocken gelegter Stapelfaservliesstoff aus triboelektrischen Fasermischungen ist, insbesondere aus Polypropylen/Polyethylen-Bikomponentenfasern und aus halogenfreien Polyacrylnitrilfasern.

4. Luftfilter nach Anspruch 1, **dadurch gekennzeichnet, dass** der trocken gelegte elektrostatisch wirksame Vliesstoff ein trockengelegter Vliesstoff aus coronageladenen Polypropylen-Spaltfasern ist.

5. Luftfilter nach Anspruch 1, **dadurch gekennzeichnet, dass** der trocken gelegte elektrostatisch wirksame Stapelfaser-Vliesstoff eine Luftdurchlässigkeit von grösser gleich 700 I/(m²*sec), vorzugsweise von grösser gleich 1000 I/(m²*sec), bei einem Differenzdruck von 200 Pa, einen NaCl-Durchlassgrad D_{NaCl} von kleiner gleich 40%, vorzugsweise kleiner gleich 30%, und einen Differenzdruck von kleiner gleich 20 Pa aufweist.

6. Luftfilter nach Anspruch 8, **dadurch gekennzeichnet, dass** der Quotient aus Luftdurchlässigkeit in l/(m²*sec) und NaCl-Durchlassgrad D_{NaCl} in % größer gleich einem Wert von 120 ist.

7. Luftfilter nach Anspruch 1, **dadurch gekennzeichnet, dass** die Vorfilterschicht aus Stapelfasern mit einem Titer < 10 dtex hergestellt ist.

8. Luftfilter nach Anspruch 10, **dadurch gekennzeichnet, dass** die Vorfilterschicht aus Stapelfasern mit einem Titer von 0,5 bis 5 dtex hergestellt ist und ein Flächengewicht von 30 bis 60 g/m² besitzt.

9. Luftfilter nach Anspruch 1, **dadurch gekennzeichnet, dass** die Filterschicht eine Luftdurchlässigkeit von kleiner gleich 500 l/(m²*sec) bei einem Differenzdruck von 200 Pa aufweist.

10. Luftfilter nach Anspruch 1, **dadurch gekennzeichnet, dass** die Vorfilterschicht mit der Filterschicht direkt verbunden ist.

11. Luftfilter nach Anspruch 1, **dadurch gekennzeichnet, dass** rohgasseitig vor der Vorfilterschicht eine weitere Vliesstoff- und/oder Papierschicht angeordnet ist, die die nachfolgenden Schichten vor mechanischer Beschädigung schützt oder als Verarbeitungshilfe dient.

12. Verwendung des Luftfilters nach Anspruch 1 als Staubsaugerbeutel.

## Claims

1. Multi-layer air filter comprising a filter layer comprising combinations of spunbonded nonwoven and melt-blown nonwoven fabric or comprising a spunbond/melt-blown/spunbond laminate and a prefilter layer covering it on the dust-laden gas side thereof, the prefilter layer having a dry-laid and electrostatically effective staple fibre nonwoven fabric, whose mass per unit area is from 10 to 100 g/m².

2. Air filter according to Claim 1, **characterized in that** the dry-laid electrostatically effective nonwoven fabric is a dry-laid staple fibre nonwoven fabric made of corona-charged polyolefin fibres, in particular of corona-charged polypropylene fibres.

3. Air filter according to Claim 1, **characterized in that** the dry-laid electrostatically effective nonwoven fabric is a dry-laid staple fibre nonwoven fabric made of triboelectric fibre mixtures, in particular of polypropylene/polyethylene bicomponent fibres and of halogen-free polyacrylonitrile fibres.

4. Air filter according to Claim 1, **characterized in that** the dry-laid electrostatically effective nonwoven fabric is a dry-laid nonwoven fabric made of corona-charged polypropylene split fibres.

5. Air filter according to Claim 1, **characterized in that** the dry-laid electrostatically effective staple fibre nonwoven fabric has an air permeability of greater than or equal to 700 l/(m²*sec), preferably of greater than or equal to 1000 l/(m²*sec) at a differential pressure of 200 Pa, an NaCl degree of permeability D_{NaCl} of less than or equal to 40%, preferably of less than or equal to 30%, and a differential pressure of less than or equal to 20 Pa.

6. Air filter according to Claim 8, **characterized in that** the quotient of the air permeability in l/(m²*sec) and the NaCl degree of permeability DNaCl in % is greater than or equal to a value of 120.

7. Air filter according to Claim 1, **characterized in that** the prefilter layer is made of staple fibres having a titer of <10 dtex.

8. Air filter according to Claim 10, **characterized in that** the prefilter layer is made of staple fibres having a titer of 0.5 to 5 dtex and has a mass per unit area of from 30 to 60 g/m².

9. Air filter according to Claim 1, **characterized in that** the filter layer has an air permeability of less than or equal to 500 l/(m²*sec) at a differential pressure of 200 Pa.

10. Air filter according to Claim 1, **characterized in that** the prefilter layer is directly connected to the filter layer.

11. Air filter according to Claim 1, **characterized in that** on the dust-laden gas side in front of the prefilter layer, a further nonwoven fabric layer and/or paper layer is positioned, which protects subsequent layers from mechanical damage or is used as a processing aid.

12. Use of the air filter according to Claim 1 as a vacuum cleaner bag.

## Revendications

1. Filtre à air en plusieurs couches, qui comprend une couche de filtration constituée de combinaisons d'un non-tissé de feutre soufflé à l'état fondu ou d'un stratifié de fibres filées-collées, de fibres soufflées à l'état fondu et de fibres filées-collées et une couche de préfiltration qui recouvre cette combinaison du côté du gaz brut, la couche de préfiltration présentant un feutre de fibres empilées posé à sec et électrostatiquement actif dont le poids par unité de surface est compris entre 10 et 100 g/m².

2. Filtre à air selon la revendication 1, **caractérisé en ce que** le feutre de fibres empilées posé à sec et électrostatiquement actif est un feutre de fibres empilées posé à sec constitué de fibres de polyoléfine chargées par effet Corona et en particulier de fibres de polypropylène chargées par effet Corona.

3. Filtre à air selon la revendication 1, **caractérisé en ce que** le feutre de fibres empilées posé à sec et électrostatiquement actif est un feutre de fibres empilées posé à sec constitué de mélanges de fibres triboélectriques, en particulier de fibres à deux composants de polypropylène et de polyéthylène, ainsi que de fibres de polyacrylonitrile non halogéné.

4. Filtre à air selon la revendication 1, **caractérisé en ce que** le feutre de fibres empilées posé à sec et électrostatiquement actif est un feutre de fibres empilées posé à sec constitué de fibres fendues de polypropylène chargées par effet Corona.

5. Filtre à air selon la revendication 1, **caractérisé en ce que** le feutre de fibres empilées posé à sec et électrostatiquement actif a une perméabilité à l'air supérieure ou égale à 700 l/(m².s), de préférence supérieure ou égale à 1 000 l/(m².s) pour une différence de pression de 200 Pa, un taux de passage du NaCl D_{NaCl} inférieur ou égal à 40 % et de préférence inférieur ou égal à 30 % et une perte de charge inférieure ou égale à 20 Pa.

6. Filtre à air selon la revendication 8, **caractérisé en ce que** le quotient de la perméabilité à l'air en l/(m².s) par le taux de passage du NaCl D_{NaCl} a en % une valeur supérieure ou égale à 120.

7. Filtre à air selon la revendication 1, **caractérisé en ce que** la couche de préfiltration est réalisée à partir de fibres empilées d'un titre < 10 dTex.

8. Filtre à air selon la revendication 10, **caractérisé en ce que** la couche de préfiltration est réalisée à partir de fibres empilées d'un titre de 0,5 à 5 dTex et présente un poids par unité de surface de 30 à 60 g/m².

9. Filtre à air selon la revendication 1, **caractérisé en ce que** la couche de filtration a une perméabilité à l'air inférieure à 500 l/(m².s) pour une différence de pression de 200 Pa.

10. Filtre à air selon la revendication 1, **caractérisé en ce que** la couche de préfiltration est reliée directement à la couche de filtration.

11. Filtre à air selon la revendication 1, **caractérisé en ce que** du côté du gaz brut, une autre couche de feutre et/ou de papier est disposée avant la couche de préfiltration et protège les couches suivantes des dégradations mécaniques ou sert d'auxiliaire de traitement.

12. Utilisation du filtre à air selon la revendication 1 comme sac pour aspirateur de poussières.
